# EUROPÄISCHE PATENTSCHRIFT

(11) **EP 1 660 363 B1**
(45) Veröffentlichungstag und Bekanntmachung des Hinweises auf die Patenterteilung: **24.12.2008**
(21) Anmeldenummer: 04764012.3
(22) Anmeldetag: 12.08.2004
(51) Int. Cl.: B62D 5/04, B21H 5/00

(54) **MASCHINENELEMENT**
MACHINE ELEMENT
ELEMENT DE MACHINE

(30) Priorität: 06.09.2003 DE 10341156
(43) Veröffentlichungstag der Anmeldung: 31.05.2006
(73) Patentinhaber: Schaeffler KG, 91074 Herzogenaurach (DE)
(72) Erfinder: MOTZ, Thomas, 91074 Herzogenaurach (DE); DOHR, Matthias, 91085 Weisendorf (DE); NEUWIRTH, Ernst, 91074 Herzogenaurach (DE); KRAUS, Manfred, 91074 Herzogenaurach (DE)
(86) Internationale Anmeldenummer: PCT/EP2004/009008
(87) Internationale Veröffentlichungsnummer: WO 2005/023623

(56) Entgegenhaltungen:
- WO-A-02/076808
- UMBACH R ET AL: "KALT- UND HALBWARMWALZEN VON OBERFLAECHENPROFILEN" UMFORMTECHNIK, MEISENBACH, BAMBERG, DE, Bd. 28, Nr. 4, 1. Dezember 1994 (1994-12-01), Seiten 210-217, XP000482666 ISSN: 0300-3167

## Beschreibung

### Anwendungsgebiet der Erfindung

Die Erfindung betrifft ein Maschinenelement, das wenigstens über einen Teil seiner axialen Länge mit einer ersten Verzahnung in Form von auf seiner zylindrischen Mantelfläche verlaufenden Gewindegängen für einen Gewindetrieb versehen ist.

### Hintergrund der Erfindung

Derartige Maschinenelemente werden in mannigfaltige Weise in unterschiedlichen Gewindetrieben eingesetzt, die beispielsweise eine Transport-, eine Lenkungs- oder eine Bremsfunktion zu erfüllen haben.

Ein derartiges als Zahnstange für eine Zahnstangenlenkung ausgebildetes Maschinenelement ist aus der WO 02/076808 A1 vorbekannt. Bei einer solchen Hilfskraftlenkung wird die Handlenkung durch einen Elektromotor unterstützt, der mit der Zahnstange in Triebverbindung steht. Der Elektromotor dient dabei zur Servounterstützung der herkömmlichen Lenkvorrichtung, bei der in üblicher Weise ein Lenkwunsch von einem Lenkhandrad über eine Lenkspindel auf ein Ritzel übertragen wird, das die Zahnstange betätigt. Zwischen dem Lenkspindelanschluss und dem Ritzel ist eine Drehmoment- Meßeinrichtung eingebaut. Die Drehmoment- Meßeinrichtung erfaßt das Relativmoment zwischen dem Lenkspindelanschluss und dem Ritzel und steuert über einen Elektronik-Baustein den Antrieb des Elektromotors. Zur Umwandlung der Drehbewegung des Elektromotors in eine Axialbewegung der Zahnstange ist ein Kugelgewindetrieb eingesetzt.

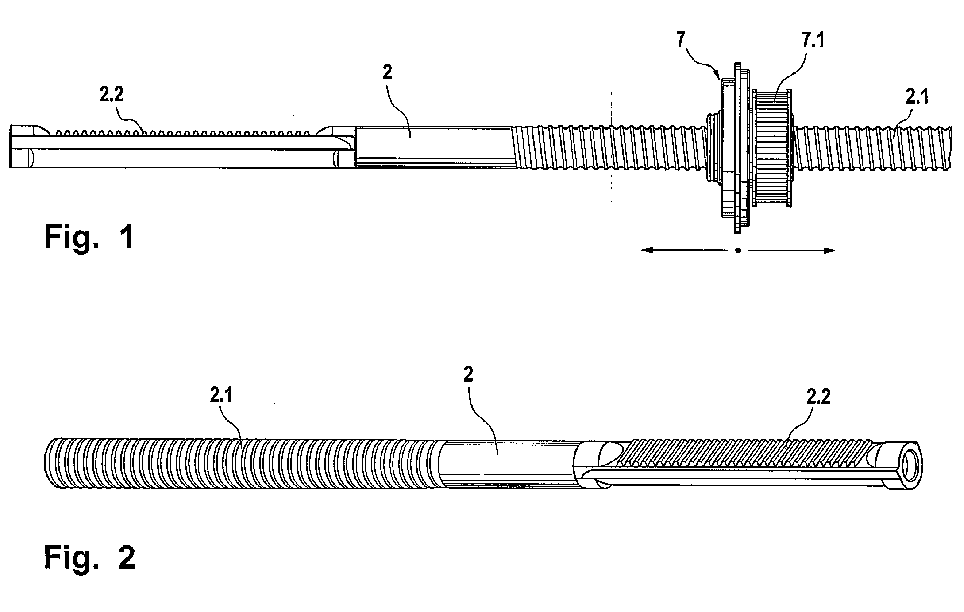

Die in Figur 2 der genannten Vorveröffentlichung gezeigte Zahnstange für die Zahnstangenlenkung eines Kraftfahrzeuges weist zwei Verzahnungsbereiche auf. Zum einen die flächenhafte Verzahnung, in die das Zahnritzel eingreift und zum anderen eine auf der Mantelfläche angeordnete Verzahnung in Form von Gewindegängen, in die die mit dem Elektromotor verbundene Gewindemutter eingreift.

Bedingt durch die unterschiedlich ausgebildete Oberflächengeometrie bzw. die unterschiedlich ausgebildeten Verzahnungsbereiche ist es nicht möglich, derartige Zahnstangen durch ein kontinuierliches Profilwalzen im Druchlaufverfahren herzustellen und entsprechend einer späteren gewünschten Länge einfach abzulängen.

### Zusammenfassung der Erfindung

Der Erfindung liegt daher die Aufgabe zugrunde, ein derart gattungsgemäß ausgebildetes Maschinenelement kostengünstig herzustellen.

Erfindungsgemäß wird diese Aufgabe nach dem kennzeichnenden Teil von Anspruch 1 in Verbindung mit dessen Oberbegriff dadurch gelöst, dass die Gewindegänge durch ein an sich bekanntes Profildurchlaufwalzen in axialer Richtung hergestellt sind, wobei das Profildurchlaufwalzen teilkontinuierlich entsprechend der gewünschten axialen Ausdehnung der Gewindegänge eingesetzt ist.

Darunter ist zu verstehen, daß der betreffende Bereich des Maschinenelements wenigstens zwischen zwei rotierende Profilwalzwerkzeuge eingebracht wird, die zunächst voneinander beabstandet sind und anschließend aufeinander zugefahren werden. Das Maschinenelement erhält bei eigener Rotation zwischen den rotierenden Profilwalzwerkzeugen deren Negativform und wird Stück für Stück in axialer Richtung durch die Profilwalzwerkzeuge hindurch bewegt. Ist die gewünschte Funktionslänge des Maschinenelements mit den Gewindegängen versehen, werden die Profilwalzwerkzeuge von einander weggefahren und das Maschinenelement kann entnommen werden, wobei fertigungsbedingt je ein Ein- und ein Auslaufbereich der Gewindegänge vorhanden ist.

Der Vorteil der erfindungsgemäßen Lösung liegt darin, daß sich derartige Maschinenelemente mit partiellen Funktionsbereichen durch diesen spanlosen Formgebungsprozess kostengünstig herstellen lassen. Es sind insbesondere im Verzahnungsbereich keine spanenden Vor- und Nacharbeiten erforderlich. Auch kann durch dieses teilkontinuierliche Profildurchlaufwalzen die axiale Ausdehnung des Gewindeprofils auf die funktionell notwendige Länge begrenzt werden, was sich insbesondere auf die Stabilität des Maschinenelements bei geringem Durchmesser auswirkt. Das teilkontinuierliche Profildurchlaufwalzen hat den weiteren Vorteil, daß im Gegensatz zum Profilwalzen im Einstichverfahren eine wesentlich geringere Werkzeugbreite erforderlich ist und somit geringere Umformkräfte notwendig sind. Es ist weiter von Vorteil, dass durch das teilkontinuierliche Profildurchlaufwalzen im Vergleich zum Einstichverfahren bessere Verzahnungsqualitäten erreichbar sind.

Vorteilhafte Ausgestaltungen der Erfindung sind in den Unteransprüchen beschrieben.

So ist nach Anspruch 2 vorgesehen, dass das Maschinenelement mit einer zweiten Verzahnung versehen ist, die gemäß Anspruch 3 flächenhaft ausgebildet ist.

In Weiterbildung der Erfindung ist nach Anspruch 4 vorgesehen, daß das Maschinenelement als eine einteilig ausgebildete Zahnstange für eine Zahnstangen-Hilfskraftlenkung mit einem Elektromotor für ein Kraftfahrzeug ausgebildet ist, die mit gelenkten Rädern in Wirkverbindung steht, wobei in die erste Verzahnung der Zahnstange ein mit einem Lenkrad verbundenes Zahnritzel eingreift und wo zur Umwandlung der Drehbewegung des Elektromotors in eine Axialbewegung der Zahnstange der Gewindetrieb vorgesehen ist, dessen Gewindegänge enthaltende Gewindespindel von einer Gewindemutter umgeben sind, so daß zwischen beiden angeordnete Wälzkörper einerseits in den Gewindegängen der Gewindespindel und andererseits in Gewindegängen der Gewindemutter abrollen.

Die Erfindung wird an nachstehendem Ausführungsbeispiel anhand einer Zahnstange für eine Zahnstangenlenkung eines Kraftfahrzeuges näher erläutert.

### Kurze Beschreibung der Zeichnungen

Es zeigen:
- Figur 1: eine Seitenansicht einer Zahnstange mit Gewindetrieb,
- Figur 2: eine perspektivische Darstellung der Zahnstange,
- Figuren 3a bis 3c: eine schematisch Darstellung der Profilgebung einer Zahnstange und
- Figur 4: einen Ausschnitt aus einer Zahnstangen-Hilfskraftlenkung für ein Kraftfahrzeug

### Ausführliche Beschreibung der Zeichnungen

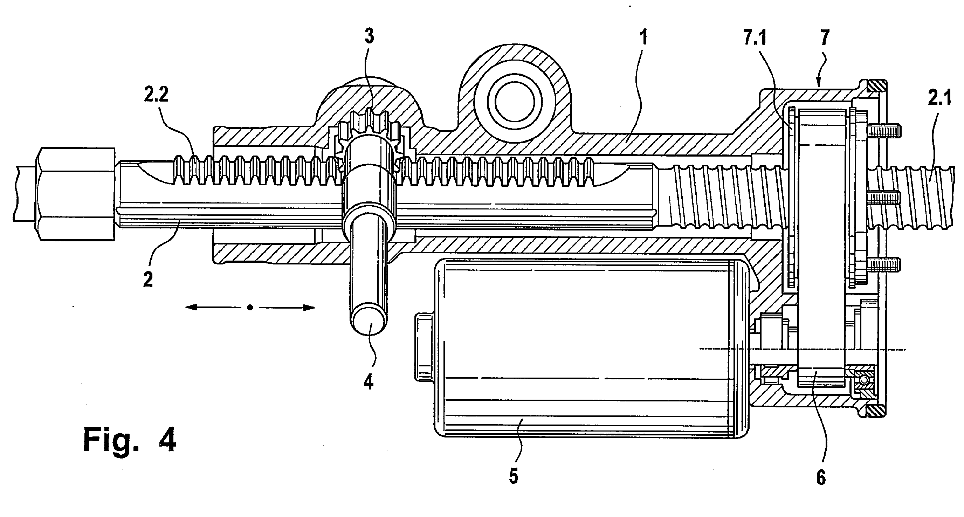

Wie aus Figur 4 ersichtlich, ist in einem Gehäuse 1 eine Zahnstange 2 längsverschieblich gelagert, die in nicht gezeigter Weise rechts- und linksseitig mit einem Lenkgestänge verbunden ist, das wiederum mit ebenfalls nicht dargestellten zu lenkenden Rändern in Wirkverbindung steht. Die Zahnstange 2 hat eine erste Verzahnung 2.1, deren Gewindegänge auf der Mantelfläche der Zahnstange 2 angeordnet sind. Wie erkennbar, erstreckt sich die erste Verzahnung 2.1 nur über einen axialen Teilbereich der Zahnstange 2. Zur Hilfskraftlenkung gehört weiter ein Elektromotor 5, der über einen Riemen 6 mit einem Gewindetrieb 7 verbunden ist. Zur Zahnstange 2 gehört auch eine zweite flächenhafte Verzahnung 2.2, in die ein Zahnritzel 3 eingreift, das mit einer Lenkspindel 4 verbunden ist, die wiederum von einem ebenfalls nicht dargestellten Lenkrad bewegt wird.

Wird nun vom Fahrer über das Lenkrad und die Lenkspindel 4 das Zahnritzel 3 rechts- oder linkseitig in Umfangsrichtung bewegt, so wird durch eine zwischen Lenkspindel 4 und Zahnritzel 3 eingebaute Drehmoment-Messeinrichtung das Relativmoment zwischen beiden erfaßt. Die Drehmoment-Messeinrichtung steuert nun den Antrieb des Elektromotors 5, der über den Riemen 6 mit dem Gewindetrieb 7 verbunden ist. Bei Rotation der Gewindemutter des Gewindetriebes 7 wird die Zahnstange 2 in axialer Richtung entsprechend den Pfeilen nach rechts oder nach links bewegt, so daß der gewünschte Lenkungseinschlag der Räder bewirkt wird.

Die in den Figuren 1 und 2 dargestellte Zahnstange 2 mit der ersten umlaufenden Verzahnung 2.1 in Form von auf der Mantelfläche angeordneten Gewindegängen und der zweiten flächenhaften Verzahnung 2.2 und lässt erkennen, dass bei Rotation der Riemenscheibe 7.1 des ortsfest angeordneten Gewindetriebes 7 die Zahnstange 2 in axialer Richtung je nach Drehsinn verschoben wird.

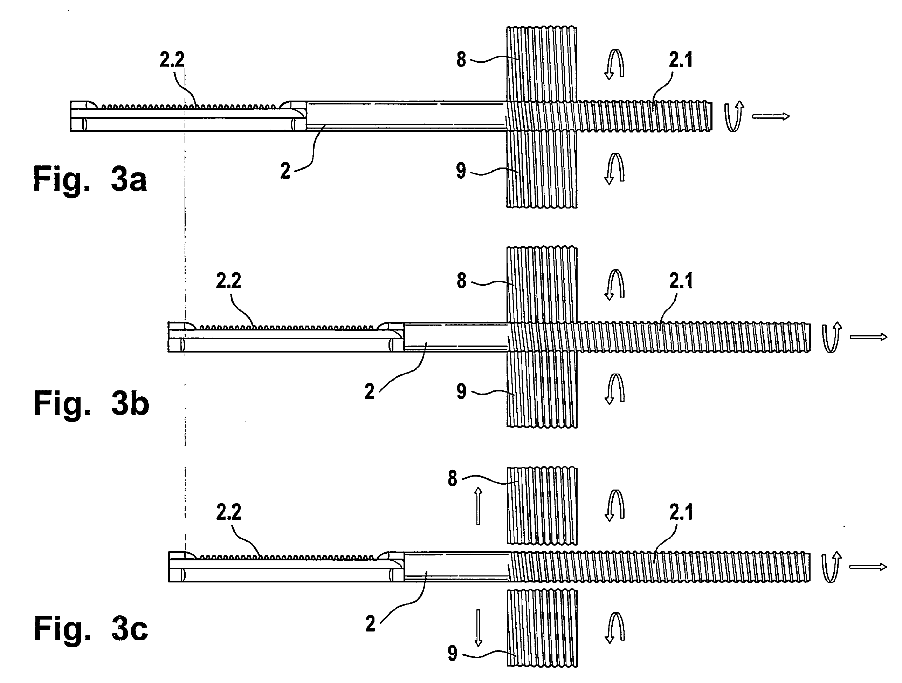

Wie die schematischen Darstellungen in den Figuren 3a, 3b und 3c zeigen, sind wenigstens zwei Profilwalzwerkzeuge 8, 9 vorgesehen, die voneinander achsparallel beabstandet sind. Das Profilwalzwerk 8 ist drehbar auf einem nicht dargestellten Schlitten gehalten, während das Profilwalzwerk 9 auf einem anderen, ebenfalls nicht dargestellten Schlitten drehbar gelagert ist. Beide Schlitten sind aufeinander zubewegbar bzw. können voneinander entfernt werden, so dass die Größe des Walzspaltes einstellbar ist. Die Drehrichtung der beiden mit gleicher Drehzahl angetriebenen Profilwalzwerkzeuge 8, 9 ist gleichsinnig, was durch deren Drehrichtungspfeile angedeutet ist. Dadurch ergibt sich mit dem Profildurchlaufwalzen eine entgegengesetzte Rotationsrichtung der Zahnstange 2. Bei diesen Kaltwalzprozeß wird nun die Zahnstange 2 durch eine nicht dargestellte geeignete Zuführungsrichtung in den Arbeitsraum, d.h., in den zugefahrenen Walzspalt zwischen beiden Profilwalzwerkzeugen 8, 9 eingebracht. Bei deren Rotation wird die Zahnstange 2 ebenfalls in Rotation versetzt und Stück für Stück in axialer Richtung zwischen die beiden Profilwalzwerkzeuge 8, 9 hindurchgezogen. Wie die Figuren 3a bis 3c erkennen lassen, wird die Zahnstange 2 in Pfeilrichtung durch die Profilwalzwerkzeuge 8, 9 so lange hindurch bewegt, bis die gewünschte Funktionslänge der Zahnstange 2 mit der umlaufenden ersten Verzahnung 2.1 versehen ist. Diese Funktionslänge ist dann in axialer Richtung gesehen größer als die axiale Breite der Profilwalzwerkzeuge 8, 9.

### Bezugszahlenliste

- 1: Gehäuse
- 2: Zahnstange
- 2.1: erste Verzahnung
- 2.2: zweite Verzahnung
- 3: Zahnritzel
- 4: Lenkspindel
- 5: Elektromotor
- 6: Riemen
- 7: Gewindetrieb
- 7.1: Riemenscheibe
- 8: Profilwalzwerkzeug
- 9: Profilwalzwerkzeug

## Patentansprüche

1. Einteilig ausgebildete Zahnstange (2) einer Zahnstangen-Hilfskraftlenkung mit einem Elektromotor (5) für ein Kraftfahrzeug, die mit gelenkten Rädern in Wirkverbindung steht und die wenigstens über einen Teil ihrer axialen Länge mit einer ersten Verzahnung (2.1) in Form von auf ihrer zylindrischen Mantelfläche verlaufenden Gewindegängen für einen Gewindetrieb und mit einer zweiten, flächenhaft ausgebildeten Verzahnung (2.2) versehen ist, wobei in die zweite Verzahnung (2.2) der Zahnstange (2) ein mit einem Lenkrad verbundenes Zahnritzel (3) eingreift und wo zur Umwandlung der Drehbewegung des Elektromotors (5) in eine Axialbewegung der Zahnstange (2) der Gewindetrieb (7) vorgesehen ist, dessen Gewindegänge enthaltende Gewindespindel von einer Gewindemutter umgeben ist, so dass zwischen beiden angeordnete Wälzkörper einerseits in den Gewindegängen der Gewindespindel und andererseits in Gewindegängen der Gewindemutter abrollen, **dadurch gekennzeichnet, dass** die Gewindegänge durch ein an sich bekanntes Profildurchlaufwalzen in axialer Richtung hergestellt sind, wobei das Profildurchlaufwalzen teilkontinuierlich entsprechend der gewünschten axialen Ausdehnung der Gewindegänge eingesetzt ist.

## Claims

1. Single-part toothed rack (2) of a rack-and-pinion power steering system having an electric motor (5) for a motor vehicle, which power steering system is operatively connected to steered wheels and which is provided, at least over part of its axial length, with a first toothing (2.1) in the form of threads, running on its cylindrical lateral surface, for a threaded drive and with a second toothing (2.2) of a flat form, a toothed pinion (3), which is connected to a steering wheel, engaging in the second toothing (2.2) of the toothed rack (2) and, in order to convert the rotational movement of the electric motor (5) into an axial movement of the toothed rack (2), the threaded drive (7) being provided, whose threaded shaft, which has threads, is surrounded by a threaded nut, so that rollers arranged between said threaded shaft and said threaded nut roll both in the threads of the threaded shaft and in threads of the threaded nut, **characterized in that** the threads are produced by means of a continuous shape rolling process in the axial direction, as is known per se, the continuous shape rolling process being used in a partially continuous manner corresponding to the desired axial extent of the threads.

## Revendications

1. Crémaillère (2) réalisée d'une seule pièce pour une direction assistée à crémaillère, avec un moteur électrique (5) pour un véhicule automobile, qui est en liaison fonctionnelle avec les roues dirigées et qui est pourvue au moins sur une partie de sa longueur axiale d'une première denture (2.1) en forme de pas de filet s'étendant sur sa surface d'enveloppe cylindrique pour une vis d'entraînement et d'une deuxième denture (2.2) réalisée sous forme plane, un pignon denté (3) connecté au volant de direction venant en prise dans la deuxième denture (2.2) de la crémaillère (2), et où la vis d'entraînement (7) est prévue pour convertir le mouvement de rotation du moteur électrique (5) en un mouvement axial de la crémaillère (2), dont la broche filetée contenant les pas de filet est entourée par un écrou fileté, de sorte que des corps de roulement disposés entre les deux roulent d'une part dans les pas de filet de la broche filetée et d'autre part dans des pas de filet de l'écrou fileté, **caractérisée en ce que** les pas de filet sont fabriqués dans la direction axiale par un rouleau continu profilé connu en soi, le rouleau continu profilé étant utilisé en partie de manière continue en fonction de l'étendue axiale souhaitée des pas de filets.
